Europäisches Patentamt

European Patent Office

Office européen des brevets

(19)

(11) Veröffentlichungsnummer: **0 070 009**
**B1**

(12)  # EUROPÄISCHE PATENTSCHRIFT

(45) Veröffentlichungstag der Patentschrift:
30.04.86

(21) Anmeldenummer: 82106167.8

(22) Anmeldetag: 09.07.82

(51) Int. Cl.⁴: **H 04 B 14/04**

(54) **Verfahren zur Codierung von pulsamplitudenmodulierten Signalen in pulscodemodulierte Signale nach einer angenäherten logarithmischen Kennlinie.**

(30) Priorität: 13.07.81 DE 3127600

(43) Veröffentlichungstag der Anmeldung:
19.01.83 Patentblatt 83/3

(45) Bekanntmachung des Hinweises auf die Patenterteilung:
30.04.86 Patentblatt 86/18

(84) Benannte Vertragsstaaten:
AT BE CH DE FR GB IT LI LU NL SE

(56) Entgegenhaltungen:
FR - A - 2 376 562

ELECTRONIC DESIGN, Band 26, Nr. 9, April 1978, Seiten 42-48, Rochelle Park (USA); D. HACKMEISTER: "IC push into data communications relieves processors, cuts software"

(73) Patentinhaber: Siemens Aktiengesellschaft, Berlin und München Wittelsbacherplatz 2, D-8000 München 2 (DE)

(72) Erfinder: Rathgeber, Max, Dipl.-Ing., Tölzer Strasse 38, D-8028 Taufkirchen (DE)

## Beschreibung

Die Erfindung betrifft ein Verfahren zur Codierung von pulsamplitudenmodulierten Signalen in pulscodemodulierte Signale nach einer angenäherten logarithmischen Codierungskennlinie, deren Dynamikbereich in mehrere Segmente mit in sich linearer Codierung unterteilt ist, das mit einer ersten von der Amplitude des Eingangssignals abhängigen Vorentscheidung arbeitet und Signale unterhalb oder oberhalb einer vorgegebenen Schwelle mittels einer Amplitudentransformation in komprimierte Eingangswerte einer Teilcodierungskennlinie umsetzt.

Zur Reduzierung der Datenrate ist es bei der Umsetzung von pulsamplitudenmodulierten Signalen bekannt, eine Kompression durch eine angenäherte logarithmische Kennlinie durchzuführen. Praktisch durchgesetzt hat sich hierbei die sogenannte 13-Segment-Codierungskennlinie (CCITT). Bei dieser Kennlinie ist der gesamte Bereich für positive und negative Amplituden in 13 lineare Abschnitte unterteilt. Innerhalb dieser Abschnitte, die unterschiedliche Neigungen aufweisen, sind die Amplituden wiederum linear codiert. Aus der deutschen Auslegeschrift 17 62 846 ist ein Verfahren und eine Einrichtung zur Codierung von pulsamplitudenmodulierten Signalen in PCM-Signale bekannt. Bei diesem Verfahren wird das Eingangssignal in zwei oder mehrere Amplitudenabschnitte unterteilt. Durch Multiplikation der kleinen Eingangssignale werden über mindestens ein Segment gleiche Codierungskennlinien geschaffen, so daß der Dynamikumfang eingeschränkt wird und sich eine einfachere Codierungsanordnung ergibt. Da die Codierungseinrichtung oft im Multiplexbetrieb eingesetzt wird, sind hohe Anforderungen an die Verarbeitungsgeschwindigkeit zu stellen.

Aufgabe der Erfindung ist es, ein Codierverfahren zur Umcodierung von amplitudenmodulierten Signalen in PCM-Signale nach einer angenäherten logarithmischen Kennlinie anzugeben, das mit weniger Codierschritten auskommt.

Ausgehend vom einleitend beschriebenen Stand der Technik wird die Erfindung dadurch gelöst, daß bei der Teilcodierungskennlinie für positive und negative Eingangswerte jeweils eine zweite Vorentscheidung bei einem zweiten Schwellwert durchgeführt wird, der den Dynamikbereich der Teilcodierungskennlinie in zwei Teilbereiche derart aufteilt, und daß die weitere Codierung des Eingangswertes im unteren Teilbereich und im oberen Teilbereich mit der gleichen Anzahl von Wägeschritten erfolgt.

Vorteilhaft bei diesem Verfahren ist es, daß ein exakter Codierschritt weniger benötigt wird. Die zweite Vorentscheidung kann hierbei vom eigentlichen Codierungsteil - dem Wägeteil - durchgeführt werden.

Es ist vorteilhaft, daß beim Unterschreiten des Schwellwertes der zweiten Vorentscheidung durch den Eingangswert zunächst das Vorzeichen in einem Wägeteil ermittelt wird und anschließend der exakte Wert codiert wird und daß beim Überschreiten des Schwellwertes bei dieser Vorentscheidung gleichzeitig das Vorzeichen und anschließend der exakte Wert codiert wird.

Bei Unterschreiten des zweiten Schwellwertes wird zunächst das Vorzeichen ermittelt. Die Ermittlung erfolgt über den Wägeteil, indem der Wert Null an eine Vergleichseinrichtung angelegt wird. Anschließend erfolgt die Codierung des anliegenden Eingangswertes. Ist dagegen der zweite Schwellwert amplitudenmäßig überschritten worden, wird sogleich das Vorzeichen mitbestimmt. Anschließend erfolgt wiederum die Codierung in bekannter Weise. Hierzu werden vom Wägeteil Entscheidungsschwellen, die den Knickpunkten der Teilcodierungskennlinien entsprechen, angelegt. Dieser Vorgang wird solange wiederholt, bis das entsprechende Segment ermittelt wird. Dann erfolgt die Codierung innerhalb eines Segementes.

Es ist besonders günstig, daß der Schwellwert der zweiten Vorentscheidung ca. in der Mitte des betreffenden Segments der Teilcodierungskennlinie liegt.

Bei dieser Schwellwertanordnung brauchen die Komparatoren nicht besonders exakt ausgeführt sein. Ebenso kann eine Entscheidung schon kurz nach dem Anlegen des zu codierenden Signals durchgeführt werden. Da die Schwellwerte toleranzbehaftet sind, muß die exakte Codierung innerhalb eines Segments trotz fehlerhafter Vorentscheidung bei der Schwellenbewertung gesichert sein. Für die Codierung wird deshalb ein Überlappungsbereich um die Schwellwerte herum geschaffen.

Weitere vorteilhafte Ausbildungen der Erfindung sind in den übrigen Unteransprüchen angegeben.

Ein Ausführungsbeispiel der Erfindung wird anhand der Fig. 1 bis 4 näher erläutert.
Es zeigen:
Fig. 1 ein Prinzipschaltbild einer Codieranordnung,
Fig. 2 den positiven Teil der Codierungskennlinie,
Fig. 3 die Teilcodierungskennlinie und
Fig. 4 den Wägeteil.

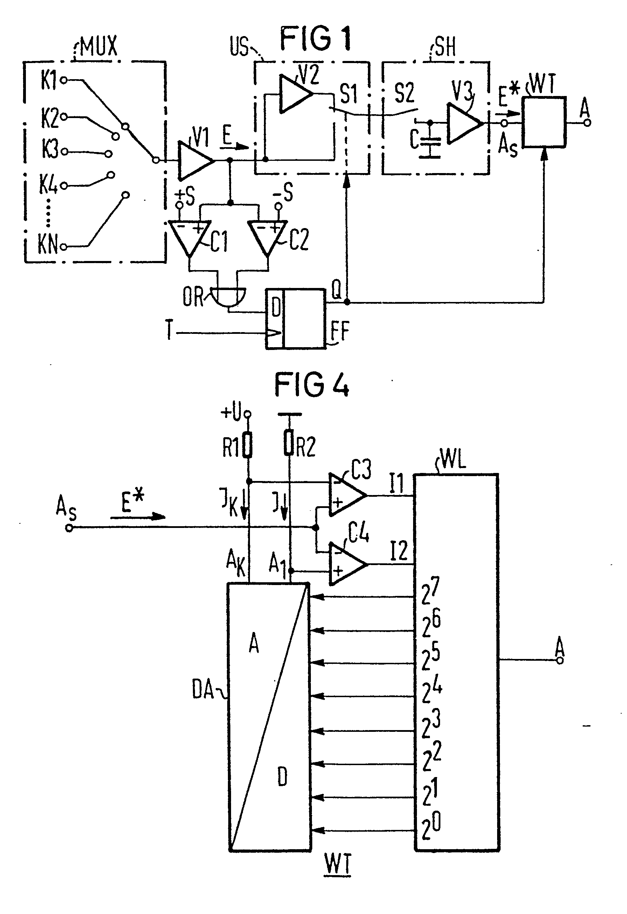

Die Codierungsanordnung nach Fig. 1 enthält eine Multiplexeinrichtung MUX, an deren Eingänge mehrere Niederfrequenzkanäle K1 bis KN angeschaltet sind. Der Ausgang der Multiplexeinrichtung MUX ist an den Eingang eines Eingangsverstärkers V1 angeschaltet. An den Ausgang des Eingangsverstärkers V1 sind zwei Komparatoren C1 und C2 angeschaltet. An den invertierenden zweiten Eingang des ersten Komparators C1 ist ein positiver Schwellwert +S angelegt. An den zweiten nicht invertierenden Eingang des zweiten Komparators C2 ist einnegativer Schwellwert -S angelegt. Die Ausgänge der Komparatoren sind über ein ODER-Gatter zusammengeschaltet. Dies kann auch eine "wired-or"-Verknüpfung sein. Der Ausgang des ODER-Gatters OR ist mit dem D-Eingang einer Kippstufe FF verbunden, deren Ausgang Q eine Umschalteinrichtung US betätigt. Diese Umschalteinrichtung US enthält einen Schalter S1, der einmal direkt an den Ausgang des Eingangsverstärkers V1 und - bei kleinen Amplituden des Eingangssignals - über einen zweiten Verstärker V2 an den Ausgang des Eingangsverstärkers V1 angeschaltet ist. Der Ausgang des Schalters S1 ist mit einer Abtast- und Halte-Schaltung SH verbunden. Diese enthält in bekannter Weise einen Schalter S2, einen nach Masse geschalteten Kondensator C und einen dritten Verstärker V3 zur Entkopplung. An den Ausgang der Abtast- und Halte-Schaltung SH ist ein Wägeteil WT mit dem Ausgang A angeschaltet. Die Multiplexeinrichtung, die D-Kippstufe FF, die Abtast- und Halte-Schaltung SH und der Wägeteil WT werden von einer Taktzentrale gesteuert, die hier jedoch nicht dargestellt wurde. Allein bei der D-Kippstufe wurde die Taktzentrale durch einen Takt T angedeutet. Der Ausgang der D-Kippstufe FF greift in den Wägeteil WT ein.

Ein beliebiger Amplitudenwert, z. B. des Niederfrequenzkanals K1, wird über die Multiplexeinrichtung MUX und den Eingangsverstärker V1 den beiden Komparatoren C1 und C2 zugeführt. Überschreitet die Amplitude hierbei einen der beiden Schwellwerte +S oder -S, so wird über das Oder-Gatter OR und die D-Kippstufe die Umschalteinrichtung US betätigt und deren Verstärkung umgeschaltet. Hierdurch wird der Abtast- und Halte-Schaltung SH ein in der Dynamik reduziertes Signal angeboten, wodurch sich auch der anschließende Wägeteil vereinfacht.

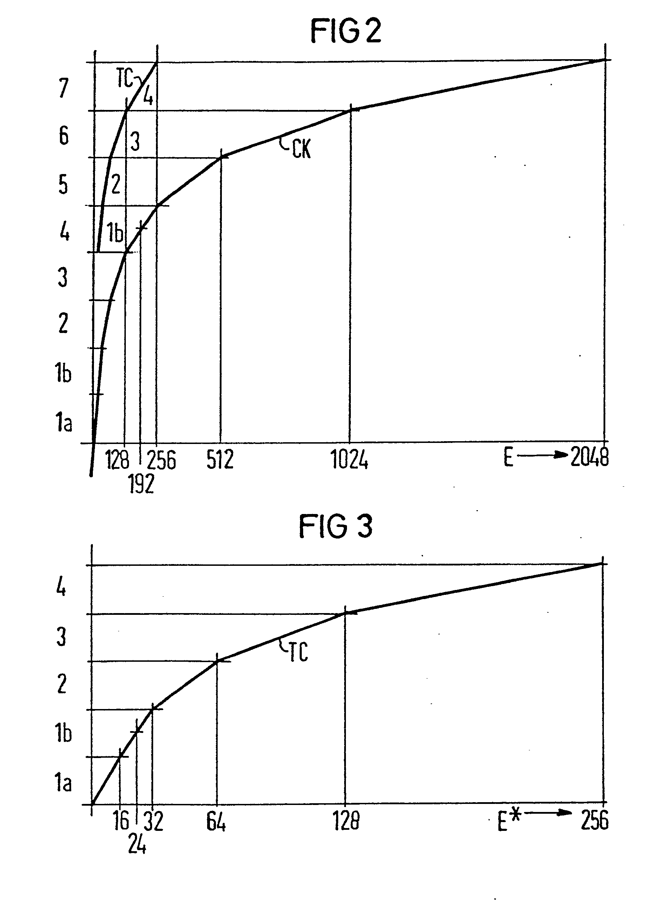

Zunächst soll anhand der Fig. 2 die Funktion der Umschalteinrichtung US näher erläutert werden. In Fig. 2 ist der positive Teil einer Codierungskennlinie CK der sogenannten 13-Segment-Kennlinie dargestellt. Die maximale als Abszisse dargestellte Amplitude des Eingangssignals E beträgt das 2048fache des kleinsten codierbaren Amplitudenschrittes. Als Ordinate wurden die Segmente 1a, 1b und 2 bis 7 dargestellt. Bei diesem Ausführungsbeispiel liegen die Schwellen bei ca. dem 192fachen des kleinsten codierbaren Amplitudenschrittes. Unterhalb dieser Schwellen werden die kleinen Eingangssignale verstärkt. Statt der Verstärkung der kleinen Eingangssignale kann auch in Abhängigkeit von den Schwellen eine Abschwächung großer Eingangssignale erfolgen. Der letztgenannte Fall wurde in die Fig. 2 eingezeichnet, wobei bei der 13-Segment-Kennlinie der Abschwächungsfaktor 8: 1 ist. Hierdurch werden die ursprünglichen Segmente 4 bis 7 in die Segmente 1b bis 4 einer Teilcodierungskennlinie TC überführt. Die Entscheidung der ersten beiden Komparatoren C1 und C2 wird natürlich bei der Codierung des PCM-Signals berücksichtigt. Der Wägeteil WT hat jedoch nur die in Fig. 3 nochmals dargestellte Teilcodierungskennlinie TC zu berücksichtigen. Der Amplitudenbereich der Eingangswerte E* für den Wägeteil WT ist somit von dem 2048fachen auf das 256fache (jeweils für positive und negative Eingangssignale) des kleinsten codierbaren Amplitudenschrittes reduziert worden.

Erfindungsgemäß wird die Teilcodierungskennlinie TC wieder in zwei Teilbereiche aufgeteilt (Fig. 3). Bei der 13-Segment-Kennlinie liegt der Schwellwert zur Aufteilung der Teilcodierungskennlinie bei ca. 24/256 der maximalen Amplitude des Eingangswertes E* des Wägeteils. Die Codierung der beiden Teilbereiche kann so mit der gleichen Anzahl von Schritten erfolgen.

Die Funktion wird anhand des Wägeteils in Fig. 4 erläutert. Der Wägeteil enthält im wesentlichen die Wägelogik WL, einen Digital-Analog-Umsetzer DA und ein weiteres Komparatorenpaar C3, C4, deren Ausgänge mit jeweils einem Eingang I1, I2 der Wägelogik verbunden sind. Der nicht invertierende Eingang des dritten Komparators C3 und der invertierende Eingang des vierten Komparators C4 sind zusammengeschaltet und an den Ausgang $A_S$ der Abtast- und Halte-Schaltung SH angeschlossen. Der invertierende Eingang des dritten Komparators C3 ist an den Ausgang $A_k$ des Digital-Analog-Umsetzers DA angeschaltet und gleichzeitig über einen Widerstand RI mit dem positiven Bezugspotential +U, das dem positiven Maximalwert des Eingangssignals E* des Wägeteils entspricht, verbunden. Der nicht invertierende Eingang des vierten Komparators C4 ist mit dem Ausgang $A_1$ des Digital-Analog-Umsetzers DA und gleichzeitig mit einem Widerstand $R_2$ verbunden, dessen zweiter Anschluß an Masse geschaltet ist. Der Digital-Analog-Umsetzer ist ein handelsübliches Bauelement, z. B. der Typ DAC-08 der Fa. Bourns, Columbia Avenue, Riverside/USA. An seinen Ausgängen $A_1$ und $A_k$ liefert der Digital-Analog-Umsetzer die Ströme I und $I_k$. Die Ausgänge der Komparatoren C3 und C4 sind mit Eingängen der Wägelogik WL verbunden. Die Wägelogik steuert ihrerseits den Digital-Analog-Umsetzer DA über ihre mit $2^0$ bis $2^7$ bezeichneten Ausgänge.

Die vom Digital-Analog-Umsetzer DA erzeugten Ströme sind negativ, d. h. in den Baustein hineingerichtet. Der Strom $I_k$ ist hierbei komplementär zum Strom I, ergänzt ihn also zu einem Strom konstanter Größe. Durch die Anschaltung der Widerstände R1 und R2 an verschiedene Potentiale werden die Schwellen des dritten und des vierten Komparators so gesteuert, daß sie stets symmetrisch zu 0 Volt liegen.

Bereits beim Abtasten eines analogen Signales am Eingang der Codierungsanordnung werden über die Wägelogik WL und den Digital-Analog-Umsetzer DA die Entscheidungsschwellen für den dritten und vierten Komparator, hier ± 24, eingestellt. Ist der am Ausgang der Abtast- und Halte-Schaltung SH anliegende Eingangswert E* des Wägeteils beispielsweise positiv und größer als der vorgegebene Schwellwert, so spricht der dritte Komparator C3 an. Damit steht das Vorzeichen fest und die weitere Codierung über die Wägelogik WL erfolgt, indem zunächst als nächste weitere Entscheidungsschwelle ± 64 angelegt wird. Wird dieser Wert unterschritten, wird als nächste Schwelle ± 32, wird dagegen die Schwelle von 64 überschritten, wird als nächste Schwelle ± 128 angelegt, wodurch das endgültig zu codierende Segment bestimmt ist und anschließend die weitere Codierung innerhalb des Segmentes durch vier weitere Wägeschritte, da jedes Segment in weitere 16 Teile unterteilt ist, durchgeführt wird.

Liegt jedoch ein Eingangswert E*, der kleiner als der zweite Schwellwert ist, an den Eingängen des dritten und des vierten Komparators an, so wird zunächst das Vorzeichen - also positive oder negative Eingangsspannung- dadurch ermittelt, daß beiden Komparatoren C3, C4 über den Digital-Analog-Umsetzer DA als Vergleichswert 0 Volt zugeführt wird. Hierbei ist der Strom I = 0 und der komplementäre Strom $I_k$ ein Maximum. Es wird nur ein Komparator ansprechen, wodurch das Vorzeichen ermittelt ist. Anschließend werden in bekannter Weise über den Digital-Analog-Umsetzer verschiedene Vergleichswerte an die Komparatoren angelegt. Da die Segmente 1a und 1b zu codieren sind, die mehr als 16 Codierungsstufen beinhalten, sind weitere fünf Wägungsschritte notwendig.

Die Codierung geht wieder so vor sich, daß zunächst das größtmögliche Einzelgewicht des Digital-Analog-Umsetzers als Vergleichswert verwendet wird. Ist es bereits zu groß, wird das nächstkleinere Einzelgewicht verwendet; ist es zu klein, wird das nächstkleinere Einzelgewicht hinzugefügt und so weiter.

Durch die Einfügung weiterer Vorentscheidungsschwellen ist es möglich, einen weiteren exakten Wägeschritt einzusparen.


**Patentansprüche:**

1. Verfahren zur Codierung von pulsamplitudenmodulierten Signalen in pulscodemodulierte Signale nach einer angenäherten logarithmischen Codierungskennlinie (CK), deren Dynamikbereich in mehrere Segmente mit in sich linearer Codierung unterteilt ist, das mit einer ersten von der Amplitude des Eingangssignals (E) abhängigen Vorentscheidung arbeitet und Signale unterhalb oder oberhalb einer vorgegebenen Schwelle mittels einer Amplitudentransformation in komprimierte Eingangswerte (E*) einer Teilcodierungskennlinie (TC) umsetzt, dadurch gekennzeichnet, daß bei der Teilcodierungskennlinie (TC) für positive und negative Eingangswerte (E*) jeweils eine zweite Vorentscheidung bei einem zweiten Schwellwert (24) durchgeführt wird, der den Dynamikbereich der Teilcodierungskennlinie (TC) in zwei Teilbereiche derart aufteilt, daß die weitere Codierung des Eingangswertes (E*) im unteren Teilbereich (<24) und im oberen Teilbereich (≧24) mit der gleichen Anzahl von Wägeschritten erfolgt.

2. Verfahren nach Anspruch 1, dadurch gekennzeichnet, daß beim Unterschreiten des Schwellwertes (24) der zweiten Vorentscheidung durch den Eingangswert (E*) zunächst das Vorzeichen in einem Wägeteil (WT) ermittelt wird und anschließend der exakte Wert codiert wird und daß beim Überschreiten des Schwellwertes bei der Vorentscheidung gleichzeitig das Vorzeichen und anschließend der exakte Wert codiert wird.

3. Verfahren nach Anspruch 1 oder 2, dadurch gekennzeichnet, daß die Schwelle der zweiten Vorentscheidung ca. in der Mitte des betreffenden Segments (1b) der Teilcodierungskennlinie (TC) liegt.

4. Verfahren nach einem der vorhergehenden Ansprüche 1 bis 3, dadurch gekennzeichnet, daß bei der Verwendung der 13-Segment-Kennlinie als Codierungskennlinie (CK) die Schwelle der ersten Vorentscheidung bei ca. ± 192/2048 des maximalen Eingangssignals (E) liegt, daß durch die Amplitudentransformation die Eingangssignale (E) unterhalb dieses ersten Schwellwertes um den Faktor 8 verstärkt werden und daß die Schwelle für die zweite Vorentscheidung bei ca. ± 24/256 des maximalen Eingangswertes (E*) der Teilcodierungskennlinie (TC) liegt.

5. Verfahren nach einem der vorhergehenden Ansprüche 1 bis 4, dadurch gekennzeichnet, daß der Codierungsanordnung eine Multiplexeinrichtung (MUX) vorgeschaltet ist.

6. Anordnung zur Durchführung des Verfahrens nach einem der vorhergehenden Ansprüche mit einem Eingangsverstärker (V1), an dessen Ausgang angeschaltete Doppelkomparatoren (C1,C2) mit einer Umschalteinrichtung (US) zur Verstärkungseinrichtung, an deren Ausgang eine Abtast- und Halte-Schaltung angeschaltet ist, deren Ausgang an ein Wägeteil (WT) mit einem Digital-Analog-Umsetzer verbunden ist, dadurch gekennzeichnet, daß an den Ausgang der Abtast- und Halte-Schaltung der nicht invertierende Eingang eines dritten Komparators (C3) und der invertierende Eingang eines vierten Komparators (C4) angeschlossen sind, daß deren zweite Eingänge jeweils mit einem der komplementären Ausgänge ($A_1,A_k$) des Digital-Analog-Umsetzers verbunden sind und daß die Ausgänge des dritten und vierten Komparators mit Eingängen einer Wägelogik (WL) verbunden sind, über die der Digital-Analog-Umsetzer gesteuert wird.

7. Anordnung nach Anspruch 6 dadurch gekennzeichnet, daß der invertierende Eingang des dritten Komparators (C3) zusätzlich über einen Widerstand (R1) an ein Bezugspotential (+U) angeschaltet ist und daß der nichtinvertierende Eingang des vierten Komparators (C4) über einen gleichgroßen Widerstand (R2) zusätzlich an Masse angeschaltet ist.

**Claims:**

1. A method of coding pulse-amplitude-modulated signals into pulse-code-modulated signals with an approximate logarithmic coding characteristic (CK) whose dynamic range is subdivided into a plurality of segments having an inherently linear coding, which method operates with a first preliminary decision dependent upon the amplitude of the input signal (E) and condense signals below or above a predetermined threshold by amplitude transformation into compressed input values (E*) of a subsidiary coding characteristic (TC), characterised in that a second preliminary decision is carried out for the subsidiary coding characteristic (TC) for positive and negative input values (E*) at a second threshold value (24) which divides the dynamic range of the subsidiary coding characteristic (TC) into two subsidiary ranges such that the further coding of the input value (E*) is carried out in the lower subsidiary range (<24) and in the upper subsidiary range (≧24) with the same number of weighing steps.

2. A method as claimed in Claim 1, characterised in that if the threshold value (24) of the second preliminary decision is undershot by the input value (E*), the sign is firstly determined in a weighing component (WT), and then the exact value is coded, and that if the threshold value of the preliminary decision is overshot the sign is simultaneously coded, and then the exact value is coded.

3. A method as claimed in Claim 1 or 2, characterised in that the threshold of the second preliminary decision occurs approximately in the centre of the relevant segment (1b) of the subsidiary coding characteristic (TC).

4. A method as claimed in one of the preceding Claims 1 to 3, characterised in that a 13-segment characteristic is used as coding characteristic (CK), the threshold of the fist preliminary decision occurs at approximately ± 192/2048 of the maximum input signal (E), that as a result of the amplitude transformation the input signals (E) below this first threshold value are amplified by the factor 8, and that the threshold for the second preliminary decision occurs at approximately ± 24/256 of the maximum input value (E*) of the subsidiary coding characteristic (TC).

5. A method as claimed in one of the preceding Claims 1 to 4, characterised in that the coding arrangement is preceded by a multiplex device (MUX).

6. An arrangement for the implementation of the method claimed in one of the preceding Claims, with an input amplifier (VI), double comparators (C1,C2) connected to the output of said input amplifier with a switch-over device (US) to the amplification device whose output is connected to a sample-and-hold circuit whose output is itself connected via a weighing component (WT) to a digital-toanalogue converter, characterised in that the output of the sampleand-hold circuit is connected to the non-inverting input of a third comparator (C3) and to the inverting input of a fourth comparator (C4), that the second inputs thereof are each connected to one of the complimentary outputs (A₁,Aₖ) of the digital-to-analogue converter, and that the outputs of the third and fourth comparators are connected to inputs of a weighing logic (WL) via which the digital-to-analogue converter is controlled.

7. An arrangement as claimed in Claim 6, characterised in that the inverting input of the third comparator (C3) is additionally connected via a resistor (R1) to a reference potential (+ U) and that the non-inverting input of the fouith comparator (C4) is additionally connected to earth via a resistor (R2) of equal value.

**Revendications**

1. Procédé pour coder des signaux modulés selon une modulation d'impulsions en amplitude, en des sigmaux modulés selon une modulation par impulsions codées, selon une caracteristique logarithmique de codage approchée (CK), dont la plage dynamique est subdivisée en plusieurs segments comportant un codage en soi linéaire, et selon lequel on travaille avec une première décision préalable qui dépend de l'amplitude du signal (E) et on convertit des signaux situés au-dessous ou au-dessus d'un seuil prédéterminé, au moyen d'une transformation d'amplitude, en des valeurs d'entrée comprimées (E*) d'une caractéristique de codage partielle (TC), caractérisé par le fait que, dans le cas de la caractéristique de codage partielle (TC) pour des valeurs d'entrées positives et négatives (E*) on prend respectivement une seconde décision préalable pour une seconde valeur de seuil (24) qui partage la plage dynamique de la caractéristique de codage partielle (TC) en deux plages partielles telles que le codage ultérieur de la valeur d'entrée (E*) s'effectue dans la plage partielle inférieure (<24) et dans la plage partielle supérieure (≧24) avec le même nombre de pas de pondération.

2. Procédé suivant la revendication 1, caractérisé par le fait que lorsque la valeur d'entrée (E*) tombe audessous de la valeur de seuil (24) de la seconde décision préalable, on détermine tout d'abord le signe dans une partie de pondération (WT) et l'on code emsuite la valeur exacte, et que lors du dépassement de la valeur de seuil, on code simultanément le signe lors de la décision prélable et on code ensuite la valeur exacte.

3. Procédé suivant la revendication 1 ou 2, caractérisé par le fait que le seuil de la seconde décision préalable se situe approximativement au cemtre du segment considéré (1b) de la caractéristique de codage partielle (TC).

4. Procédé suivant l'une des revendications 1 à 3 precédentes, caractérisé par le fait que lors de l'utilisation de la caractéristique à 13 segments en tant que caractéristique de codage (CK), le seuil de la première décision préalable est égal à environ ± 192/2048 fois le signal d'entrée maximum (E), que par suite de la transformation d'amplitude, les signaux d'entrée (E) sont amplifiés du facteur 8 au-dessous de cette première valeur de seuil et que le seuil pour la seconde décision préalable est égal à environ ± 24/256 fois la valeur maximale d'entrée (E*) de la caractéristique de codage partielle (TK).

5. Procédé suivant l'une des revendications 1 à 4, précédentes, caractérisé par le fait qu'un dispositif de multipiexage (MUX) est branché en amont du dispositif de codage.

6. Dispositif pour la mise en oeuvre du procédé suivant l'une des revendications précédentes, comportant un amplificateur d'entrée (V1) des comparateurs doubles (C1,C2) raccordés à la sortie de cet amplificateur et un dispositif de commutation (US) relié au dispositif d'amplification et à la sortie duquel se trouve raccordé un circuit d'échantillonnage et de maintien dont la sortie est reliée par l'intermédiaire d'un convertisseur numérique/analogique à un élément de pondération (WT), caractérisé par le fait qu'à la sortie du circuit d'échantillonnage et de maintien se trouvent raccordées l'entrée non inverseuse d'un troisième comparateur (C3) et l'entrée inverseuse d'un quatrième comparateur (C4), que leurs deux entrées sont reliées respectivement à l'une des sorties complémentaires ($A_1$, $A_k$) du convertisseur numerique/analogique et que les sorties du troisième et du troisième et du quatrième comparateurs somt reliées à des entrées d'un circuit logique de pondération (WL), au moyen duquel le convertisseur numérique/analogique est commandé.

7. Dispositif suivant la revendication 6, caractérisé par le fait que l'entrée inverseuse du troisième comparateur (C3) est en outre raccordée par l'intermédiaire d'une résistance (R1) à un potentiel de référence (+I) et que l'entrée non inverseuse du quatrième comparateur (C4) est en outre raccordée à la masse par l'intermédiaire d'une résistance de même valeur (R2).

# FIG 1

# FIG 4

# FIG 2

# FIG 3